Europäisches Patentamt

European Patent Office

Office européen des brevets

(11) Veröffentlichungsnummer : **0 175 958 B1**

(12) # EUROPÄISCHE PATENTSCHRIFT

(45) Veröffentlichungstag der Patentschrift :
26.04.89

(21) Anmeldenummer : 85111006.4

(22) Anmeldetag : 31.08.85

(51) Int. Cl.⁴ : **E 04 H 5/04**

(54) **Kabine, insbesondere Überdruckkabine zur Sicherung elektrischer Einrichtungen unter Tage durch Fremdbelüftung.**

(30) Priorität : **10.09.84 DE 3433169**

(43) Veröffentlichungstag der Anmeldung :
**02.04.86 Patentblatt 86/14**

(45) Bekanntmachung des Hinweises auf die Patenterteilung : **26.04.89 Patentblatt 89/17**

(84) Benannte Vertragsstaaten :
**BE DE FR GB**

(56) Entgegenhaltungen :
**BE–A– 896 484
CA–A– 1 163 773
DE–A– 3 001 042
DE–A– 3 046 250
DE–B– 1 252 578
FR–A– 1 128 203**

(73) Patentinhaber : **Walter Becker GmbH
Barbarastrasse 12
D-6605 Friedrichsthal (Saar) (DE)**

(72) Erfinder : **Siffrin, Horst
Katharinenstrasse 3
D-6689 Merchweiler (DE)**

(74) Vertreter : **Bernhardt, Winfrid, Dr.-Ing.
Kobenhüttenweg 43
D-6600 Saarbrücken (DE)**

**Beschreibung**

Die Erfindung betrifft eine Kabine, insbesondere Überdruckkabine zur Sicherung elektrischer Einrichtungen unter Tage durch Fremdbelüftung, die aus zwei Stirnwänden und mindestens einer Einheit aus vier zusammengesetzten Elementen besteht, die jeweils im wesentlichen den Boden bzw. die Seitenwände bzw. die Decke bilden.

Die BE-A-896 484 beschreibt einen Container, aus dem die Grundmerkmale des vorstehenden Gegenstands als bekannt gelten können.

Der Container ist zusammensetzbar aus einer Grundplatte, einer Stirnwand und zwei Seitenwänden, an denen zwei die andere Stirnwand bildende Türen angeschlagen sind. Für den Bedarfsfall ist ein flaches Firstdach daraufsetzbar. Mit diesem kann man den Container als eine Kabine verstehen. Die Seitenwände sind mit der Grundplatte zusammensetzbar durch nach außen abgewinkelte Ränder. Darüber sind an den beiden Seitenwänden oder darunter sind an der Grundplatte abgeschrägte Kanten gebildet.

Der Erfindung liegt die Aufgabe zugrunde, eine zweckmäßige Kabine, insbesondere für den oben genannten Einsatz, zu schaffen, die in nur geringen Transportraum beanspruchenden Einzelteilen transportierbar ist und sich am Einsatzort leicht und schnell zusammensetzen läßt.

Gemäß der Erfindung wird dieser Zweck in der weise erfüllt, daß daß jedes Element mit je einem abgewinkelten Abschnitt versehen ist, der eine abgeschrägte Kante von jeweils gleichen Abmessungen zwischen zwei aufeinander senkrecht stehenden Elementen bildet, und eine ringsumlaufende Abkantung aufweist als Flansch zur Verbindung der Elemente miteinander durch ringförmiges Aneinandersetzen zu der Einheit bzw. mit den Elementen mindestens einer weiteren solchen Einheit bzw. mit mindestens einer Stirnwand.

Die an allen Elementen gleichermaßen vorgesehene und dann an allen vier betreffenden Kanten der Kabine vorhandene Abwinkelung gibt den Elementen in sich und der Kabine im ganzen eine sonst nur mit erheblichen zusätzlichen Mitteln zu erreichende Steifigkeit. Besteht die Kabine aus einer Mehrzahl der genannten Einheiten, so kann ihre Stabilität noch vervielfacht werden durch die weitere Ausgestaltung der Erfindung, daß die Einheiten jeweils umgekehrt aneinandergesetzt werden und dadurch die Stöße der Elemente innerhalb der Einheit von Einheit zu Einheit zwischen den beiden Rändern der Abschrägung abwechseln, d. h. versetzt liegen.

Die durch die Abwinkelung der Elemente entstehende Schräge kann an allen vier Kanten der Kabine sinnvoll genutzt werden oder stört jedenfalls nicht.

Kabeleinführungen können an der Schrägfläche mit geringerer Verbiegung des oft dicken und nur schwer biegsamen Kabels vorgesehen werden, gleich ob unten oder oben ; die Schräge ist von unten bzw. oben und von der Seite herangeführten Kabeln gleichermaßen zugekehrt. Befestigungen der Kabine an einer sie tragenden Unterkonstruktion können an den unteren Schrägen leicht und platzsparend, letzteres nach der Seite wie nach unten, montiert werden und bleiben zugänglich. Bei Aufstellung der Kabine an der Streckenwand erlaubt die eine obere Abschrägung ein näheres Heranrücken der Kabine an den Streckenbogen. Die andere obere Schräge ist geeigneter Platz zum Anbringen der Entlüftung für das Durchspülen der Kabine vor jeder neuen Inbetriebnahme.

Im übrigen sind auch diese Benutzungen der Schräge wieder unter dem Gesichtspunkt der Festigkeit vorteilhaft : Kraftangriff wie auch Schwächung durch für Hindurchführungen erforderliche Ausnehmungen sind an der schmalen Schrägfläche in engem Abstand sowohl von der Abkantung am Rand als auch von Kante der Abwinkelung, die beide versteifen, am besten zu verkraften. So können an dieser Stelle auch alle Elemente der Kabine eine verhältnismäßig große, nur an einigen Elementen genutzte Ausnehmung aufweisen, die in einheitlicher Fertigung nach dem größten Bedarfsfall bemessen ist.

In weiterer Ausgestaltung der Erfindung wird dementsprechend vorgeschlagen, daß die abgewinkelten Abschnitte der Elemente jeweils eine Ausnehmung aufweisen, die durch einen dicht angesetzten, vorzugsweise unter Zwischenlegung einer Dichtung angeschraubten, Einsatz verschlossen ist, der eine Hindurchführung für ein Kabel, eine Wasserleitung, eine Luftleitung o. a. oder Befestigungsmittel für die Kabine oder anderes aufweist oder bloßer Verschluß ist.

Schließlich erlauben die abgewinkelten Abschnitte der Elemente darüber hinaus, sie in weiterer vorteilhafter Ausgestaltung der Erfindung mit winkelförmigen, symmetrisch zur waagerechten Mittelachse der Abschnitte angebrachten und ausgebildeten Konsolen für eine Auflage von Bodenplatten bzw. Anbringung von Tragplatten oder -stützen der elektrischen Einrichtungen zu versehen.

Die Zeichnung gibt Ausführungsbeispiele der Erfindung wieder.

Fig. 1 zeigt eine Kabine in senkrechtem Querschnitt, Einzelheiten weggelassen,

Fig. 2 zeigt die linke Unterkante der Kabine von innen in perspektivischer Darstellung,

Fig. 3 zeigt in Ausschnitt die rechte untere Ecke von Fig. 1 mit Einzelheiten,

Fig. 4 zeigt in Ausschnitt die linke untere Ecke von Fig. 1 mit Einzelheiten,

Fig. 5 zeigt in Ausschnitt die linke obere Ecke von Fig. 1 mit Einzelheiten,

Fig. 6 zeigt in Ausschnitt die rechte untere Ecke von Fig. 1, jedoch bei anderer Anordnung der Kabine, mit Einzelheiten.

Die Kabine 1 ist zusammengesetzt aus Elementen 2 und 3.

Diese gliedern sich jeweils in einen vergleichsweise langen rechteckigen Abschnitt 4 bzw. 5 und einen von diesem um 45° abgewinkelten, vergleichsweise kurzen, gleichfalls rechteckigen Abschnitt 6. Die Elemente 2 und 3 unterscheiden sich durch unterschiedliche Länge ihrer langen Abschnitte 4 und 5 ; die langen Abschnitte 5 der Elemente 3 sind etwas kürzer als die langen Abschnitte 4 der Elemente 2. Die abgewinkelten Abschnitte 6 sind an beiden Elementen 2 und 3 gleich lang. Die Breite beider Elemente 2 und 3 ist gleich. Die Größenverhältnisse sind so, daß die Kabine 1 von Personen gerade aufrecht betreten werden kann. Der Rand der Elemente 2 und 3 ist ringsum abgekantet ; die Abkantungen an den Längsseiten sind mit 7, die Abkantungen an den Stirnseiten mit 8 bezeichnet. Die Abkantungen 7 und 8 sind überall und an beiden Elementen 2 und 3 gleich hoch.

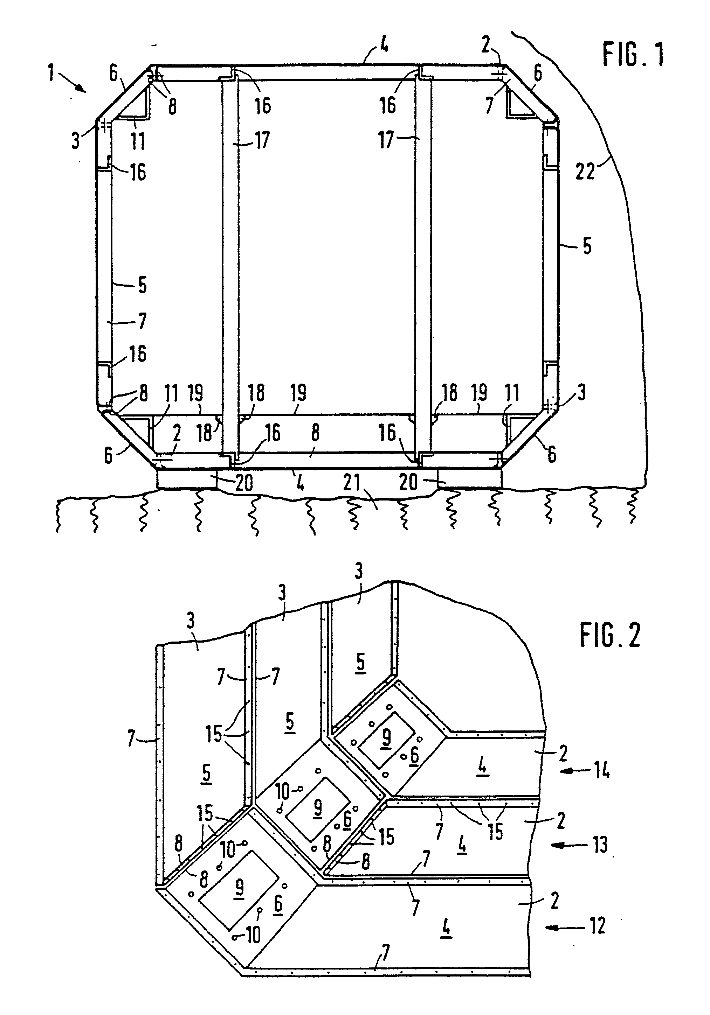

In den abgewinkelten Abschnitten 6 beider Elemente 2 und 3 befinden sich gleiche rechteckige Ausnehmungen 9 und Bohrungen 10 zu deren Längsseiten. Zu den Schmalseiten der Ausnehmungen 9 sind Konsolen 11 von der Form eines rechten Winkels in symmetrischer Anordnung zur waagerechten Mittelachse der Abschnitte 6 angeschweißt. Sie sind in Fig. 2 weggelassen.

Aus den Elementen 2 und 3 sind ringförmige Einheiten so, wie in Fig. 1 dargestellt, zusammengesetzt.

Drei solche Einheiten 12, 13 und 14 sind im vorliegenden Beispiel so, wie aus Fig. 2 ersichtlich, aneinandergesetzt.

Die längeren Elemente 2 bilden den Boden und die Decke der Kabine, die kürzeren Elemente 3 bilden die Seitenwände (wenn man die abgewinkelten Abschnitte 6 weder zum Boden bzw. der Decke noch zu den Seitenwänden zählt). Die Verbindung der Elemente 2 mit den Elementen 3 zu der ringförmigen Einheit besteht jeweils aus einer Verschraubung an den aneinanderstoßenden stirnseitigen Abkantungen 8. Die Abkantung 8 an dem langen Abschnitt 4 bzw. 5 des einen Elements 2 bzw. 3 ist rechtwinklig, die Abkantung 8 an dem abgewinkelten Abschnitt 6 ist um 45° größer, d. h. sie ist parallel zum langen Abschnitt des Elements ausgerichtet, so daß die beiden Abkantungen 8 satt aneinanderliegen.

Die Abkantungen 7 an den Längsseiten der Elemente sind sämtlich rechtwinklig und liegen so an der Verbindung der ringförmigen Elemente satt aneinander. Auch diese Verbindung besteht aus Verschraubung.

Die einzelnen Verschraubungen sind in Fig. 2 erkennbar und mit 15 bezeichnet.

Die Einheit 13 ist gegenüber der Einheit 12 und die Einheit 14 ist gegenüber der Einheit 13 um 180° verdreht ; in der Einheit 12 befinden sich die abgewinkelten Abschnitte 6 an der linken bzw. an der oberen Seite der in Fig. 2 sichtbaren Elemente 2 und 3, in der Einheit 13 befinden sie sich an der rechten bzw. der unteren Seite usw.. Der Stoß an den stirnseitigen Abkantungen 8 ist daher von Einheit zu Einheit versetzt.

An den beiden axialen Enden der zusammengesetzten ringförmigen Einheiten 12, 13 und 14 ist jeweils eine nicht gezeichnete Stirnwand angeschraubt, die vorzugsweise gleichfalls aus Elementen ungefähr von der Größe der Elemente 2 und 3 besteht. An der einen Stirnwand ist eine Schleuse als Zugang zu der Kabine vorgesehen. Die Fugen zwischen den Elementen 2 und 3 und den Stirnwänden sind mit Dichtmasse gasdicht verschlossen.

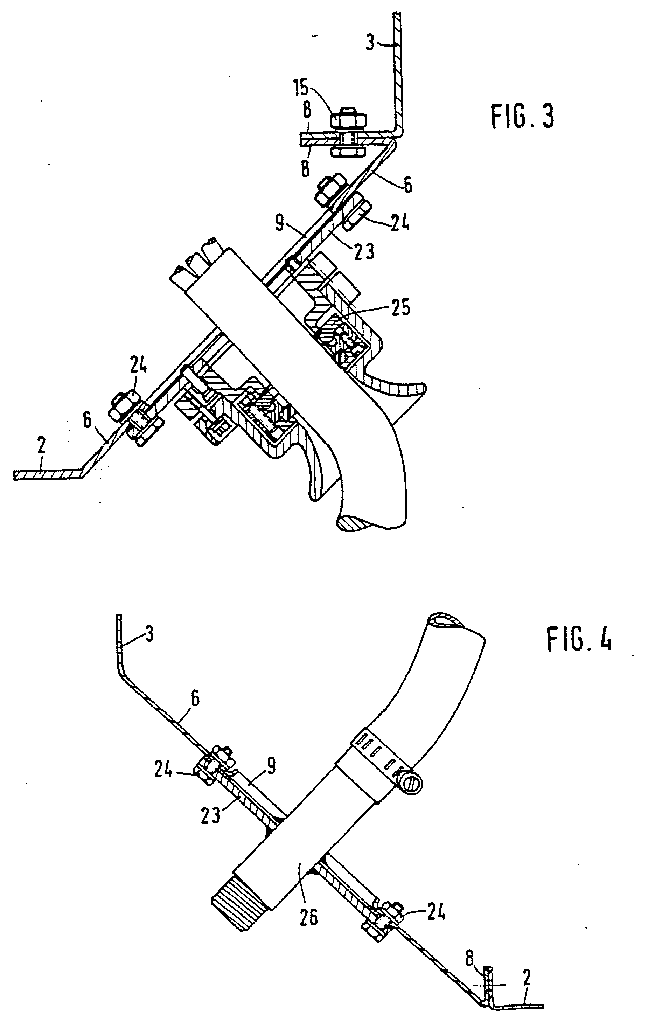

Die Ausnehmungen 9 sind jeweils unter Zwischenlegung einer Dichtung durch eine Platte verschlossen, die unter Verwendung der Bohrungen 10 dicht angeschraubt ist. Darauf wird unten noch im Zusammenhang mit Fig. 3 bis 6 näher eingegangen.

Am Boden und an der Decke wie auch an den Seitenwänden der Kabine sind Winkelprofile 16 in die Elemente 2 und 3 eingelegt. Sie sind etwa ebenso hoch wie die Abkantungen und sind an ihren Enden mit den Abkantungen 7 verklemmt. An den am Boden und an der Decke verlegten Winkelprofilen 16 sind wiederum senkrechte Stützen 17 angeklemmt. Die Stützen 17 und die an den Seitenwänden verlegten Winkelprofile 16 können zur Halterung der elektrischen Einrichtungen dienen. Gleiches gilt fur die Konsolen 11, die aufgrund ihrer erwähnten symmetrischen Anordnung jeweils mit den Konsolen der benachbarten Kabinenkanten fluchtende Anlageflächen bieten. Auf den unteren Kanten 11 sowie auf kleineren Konsolen 18 an den Stutzen 17 sind Bodenplatten 19 abgestützt.

Nach der Darstellung in Fig. 1 steht die Kabine 11 im ganzen mit flachen Balken 20 als Unterbau auf einer Streckensohle 21 nahe der Streckenwand 22.

An der ringförmigen Einheit 13 sind die in Fig. 3 bis 5 gezeigten Einrichtungen angeordnet.

Fig. 3 läßt das rechte Ende des unteren Elements 2 mit seinem abgewinkelten Abschnitt 6 und seiner Abkantung 8 erkennen sowie eine Verschraubung 15 mit der Abkantung 8 des sich anschließenden Elementes 3 der Seitenwand. Die Ausnehmung 9 in dem abgewinkelten Abschnitt 6 ist verschlossen durch eine platte 23, die, wie schon erwähnt, unter Verwendung der in Fig. 2 gezeigten Bohrungen 10 bei 24 dicht angeschraubt ist. Nach Fig. 3 ist die Platte 23 mit einer dichten Kabeldurchführung in Form einer an sich bekannten Kabelverschraubung 25 versehen.

Fig. 4 zeigt das untere Ende des linken Elements 3 mit seiner Abwinkelung 6 und seiner Abkantung 8 und den Anschluß des nächsten Elements 2. Die wiederum bei 24 angeschraubte Platte 23 ist hier mit einer Wassereinführung 26, z. B. für die Versorgung von Transformatoren, Tyristoren und ggf. einer Klimaanlage mit Kühlwasser, versehen.

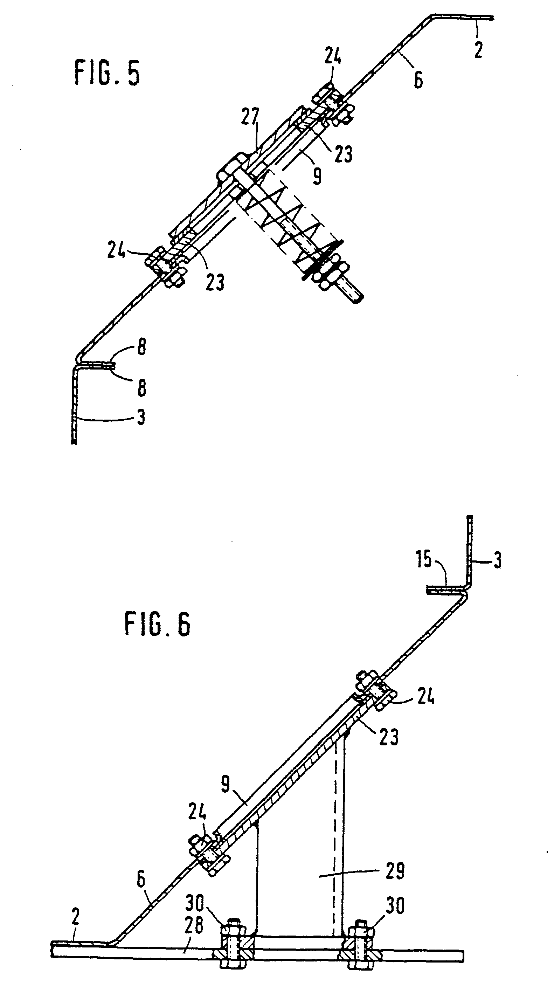

Nach Fig. 5 weist die Platte 23 einen Luftauslaß in Form eines Überdruckventils 27 bekannter Bauart auf.

Nach Fig. 6 liegt eine Kabine wie die Kabine 1 auf einer von einem nicht gezeichneten Untergestell getragenen Plattform 28. Hier ist an der Platte 23 ein Haltefuß 29 angeschweißt, der bei 30 mit der Plattform 28 verschraubt ist.

Alle Ausnehmungen 9 der Kabine, deren Verschluß nicht in solcher Weise wie nach Fig. 3 bis 6 oder in anderer Weise mit einer Nutzung kombiniert ist, sind durch eine bloße Platte 23 verschlossen.

Die Kabine ist unter ständigen Luftüberdruck gesetzt unter Verwendung der üblicherweise vorhandenen Preßluftleitung, die gleichfalls so, wie nach Fig. 4, in die Kabine eingeführt werden kann. Der Druck ist durch ein Reduzierventil vermindert. Ein ständiger Auslaß von geringem Querschnitt, der wiederum in einer Platte 23 der beschriebenen Art angeordnet und vorzugsweise durch ein Überdruckventil verschließbar ist, sorgt für eine dauernde Durchspülung und Lufterneuerung. An Leckstellen der Kabine strömt infolge des Überdrucks Luft aus und verhindert damit den Eintritt von Grubenluft.

Vor der Inbetriebnahme wird mit einem starken und langen Luftstrom die Grubenluft hinausgespült. Hierfür wie auch für einen etwaigen Ausfall des erwähnten Reduzierventils ist das Überdruckventil 27 vorgesehen.

Nicht begehbare Kabinen können auch, z. B. aus einer Flasche, mit einem anderen Gas durchströmt werden.

Die Kabine ist dank ihrer Stabilität auch als ganzes transportierbar.

**Patentansprüche**

1. Kabine (1), insbesondere Überdruckkabine zur Sicherung elektrischer Einrichtungen unter Tage durch Fremdbelüftung, die aus zwei Stirnwänden und mindestens einer Einheit (12 ; 13 ; 14) aus vier zusammengesetzten Elementen (2 ; 3) besteht, die jeweils im wesentlichen den Boden bzw. die Seitenwände bzw. die Decke bilden, dadurch gekennzeichnet, daß jedes Element (2, 3) mit je einem abgewinkelten Abschnitt (6) versehen ist, der eine abgeschrägte Kante von jeweils gleichen Abmessungen zwischen zwei aufeinander senkrecht stehenden Elementen (2, 3) bildet, und eine ringsumlaufende Abkantung (7, 8) aufweist als Flansch zur Verbindung der Elemente (2, 3) miteinander durch ringförmiges Aneinandersetzen zu der Einheit (12 ; 13 ; 14) bzw. mit den Elementen (2 ; 3) mindestens einer weiteren solchen Einheit (12 ; 13 ; 14) bzw. mit mindestens einer Stirnwand.

2. Kabine nach Anspruch 1, dadurch gekennzeichnet, daß eine Mehrzahl solcher Einheiten (12 ; 13 ; 14), jeweils umgekehrt, aneinandergesetzt ist.

3. Kabine nach Anspruch 1 oder 2, dadurch gekennzeichnet, daß die abgewinkelten Abschnitte (6) der Elemente (2 ; 3) jeweils eine Ausnehmung (9) aufweisen, die durch einen dicht angesetzten, vorzugsweise unter Zwischenlegung einer Dichtung angeschraubten (24), Einsatz (23) verschlossen ist, der eine Hindurchführung für ein Kabel (25), eine Wasserleitung (26), eine Luftleitung (27) o. a. oder Befestigungsmittel (29) für die Kabine oder anderes aufweist oder bloßer Verschluß ist.

4. Kabine nach einem der Ansprüche 1 bis 3, dadurch gekennzeichnet, daß die abgewinkelten Abschnitte (6) der Elemente (2 ;3) jeweils winkelförmige, symmetrisch zur waagerechten Mittelachse der Abschnitte (6) angebrachte und ausgebildete Konsolen (11) für eine Auflage von Bodenplatten (19) bzw. Anbringung von Tragplatten oder -Stützen der elektrischen Einrichtungen aufweisen.

**Claims**

1. Cabin (1), in particular a pressurised cabin for the protection of electrical appliances underground by independent ventilation, which consists of two end walls and at least one unit (12 ; 13 ; 14) comprising four assembled elements (2 ; 3), which in substance form the floor, the side walls and the roof respectively, characterised in that each element (2, 3) is provided with an angled section (6), which forms a sloping edge, having the same dimensions as each other angled section, between two elements (2, 3) at right angles to one another, and has a canted peripheral edge (7, 8) providing a flange for connecting the elements (2, 3) to one another into the unit (12 ; 13 ; 14) by annular arrangement or with the elements (2 ; 3) of at least one such further unit (12 ; 13 ; 14) or with at least one end wall.

2. Cabin according to Claim 1, characterised in that a plurality of such units is abutted, respectively inverted.

3. Cabin according to Claim 1 or 2, characterised in that the angled sections (6) of the elements (2 ; 3) each have an opening (9), which is closed by an insert (23) tightly fitted, preferably screwed on (24) with the interposition of a seal, and which has an aperture for a cable (25), a water pipe (26) an air line (27) or similar or fastenings (29) for the cabin or something else or is merely a seal.

4. Cabin according to one of Claims 1 to 3, characterised in that the angled sections (6) of elements (2 ; 3) each have angular brackets (11) constructed and mounted symmetrically to the horizontal central axis of sections (6) for supporting base plates (19) or for mounting plates or supports for the electrical appliances.

**Revendications**

1. Cabine (1), notamment cabine pressurisée pour la protection d'installations électriques sous terre par ventilation indépendant forcée, qui consiste en deux parois frontales et en au moins une unité (12 ; 13 ; 14) constituée par quatre éléments assemblés (2 ; 3) qui forment chacun essentiellement le fond, les parois latérales ou le plafond, caractérisée en ce que chaque élément (2, 3) est muni de chaque fois un segment replié (6) qui constitue chaque fois une arête chanfreinée ayant les mêmes dimensions entre deux éléments (2, 3) perpendiculaires l'un par rapport à l'autre, et présente une bande repliée (7, 8) s'étendant sur le pourtour et servant de bride pour la liaison des éléments (2, 3) entre eux par juxtaposition à la manière de bagues en vue de former l'unité (12 ; 13 : 14) ou pour la liaison avec les éléments (2, 3) d'au moins une autre unité de ce type (12, 13, 14) ou avec au moins une paroi frontale.

2. Cabine selon la revendication 1 caractérisée en ce qu'une pluralité de telles unités (12, 13, 14) est juxtaposée de manière chaque fois inversée.

3. Cabine selon la revendication 1 ou 2 caractérisée en ce que les segments pliés (6) des éléments (2 ; 3) comportent chaque fois un perçage (9) obturé par une pièce rapportée (23) qui y est fixée de manière étanche, de préférence par vissage (24) et insertion d'un joint et qui comporte un passage d'un câble (25), d'une conduite d'eau (26) d'un conduit d'air (27) ou analogue ou bien un moyen de fixation (29) de la cabine ou autre ou qui constitue simplement une fermeture.

4. Cabine selon l'une des revendications 1 à 3 caractérisée en ce que les segments repliés (6) des éléments (2 ; 3) comportent chaque fois des consoles (11) en forme d'angle agencées et constituées symétriquement par rapport à l'axe médian horizontal des segments (6) et destinées à l'appui de plaques support ou d'appui des installations électriques.

FIG.1

FIG.2

FIG. 3

FIG. 4

FIG. 5

FIG. 6